# EUROPEAN PATENT SPECIFICATION

(11) **EP 0 421 732 B1**
(45) Date of publication and mention of the grant of the patent: **01.02.1995**
(21) Application number: 90310778.7
(22) Date of filing: 02.10.1990
(51) Int. Cl.: G11B 15/467, G11B 27/30, G11B 20/10

(54) **Information data recording/reproducing apparatus**
Informationsdatenaufzeichnungs-/wiedergabegerät
Appareil d'enregistrement/reproduction de données d'informations

(30) Priority: 02.10.1989 JP 257562/89
(43) Date of publication of application: 10.04.1991
(73) Proprietor: SONY CORPORATION, Tokyo 141 (JP)
(72) Inventor: Aoki, Shinji, c/o Patents Division, Sony Corp., Shinagawa-ku, Tokyo-141 (JP)
(74) Representative: Thomas, Christopher Hugo

(56) References cited:
- EP-A- 0 224 186
- DE-A- 2 907 834
- DE-A- 3 704 329
- DE-A- 3 819 393
- FR-A- 2 488 431
- GB-A- 2 080 997
- GB-A- 2 088 115
- IEEE TRANSACTIONS ON CONSUMER ELECTRONICS vol. CE-33, no. 3, August 1987, NEWYORK US pages 210 - 218 K. ITOH 'A new multi-functional digital servo lsi forhome vcr'

## Description

This invention relates to information data recording/reproducing apparatus.

One known recording/reproducing apparatus for high-density recording of information data is based on an ANSI ID-1 format (Third Draft, PROPOSED AMERICAN NATIONAL STANDARD 19mm TYPE ID-1 INSTRUMENTATION DIGITAL CASSETTE FORMAT, X3B6/88-12 Project 592-D 1988-03-22).

In such a data recorder, error correction for the information data is effected by employing a product encoding notation tape. In a playback mode, any transmission error is thereby detected and corrected.

Such a data recorder will now be described in more detail.

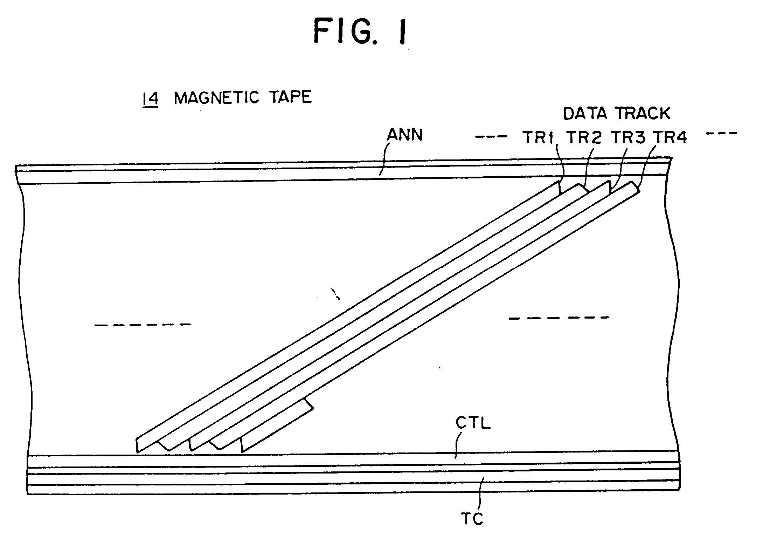

Figure 1 illustrates an example of a recording pattern formed on a magnetic tape by a data recorder based on the ID-1 format. In this diagram, ANN stands for an annotation track for recording notes thereon, and data tracks TR1, TR2, TR3, ... are for recording information data, wherein one sector is formed per data track. The data tracks are azimuth-recorded alternately. Further shown are a control track CTL for recording a control signal, and a time code track TC for recording a time code.

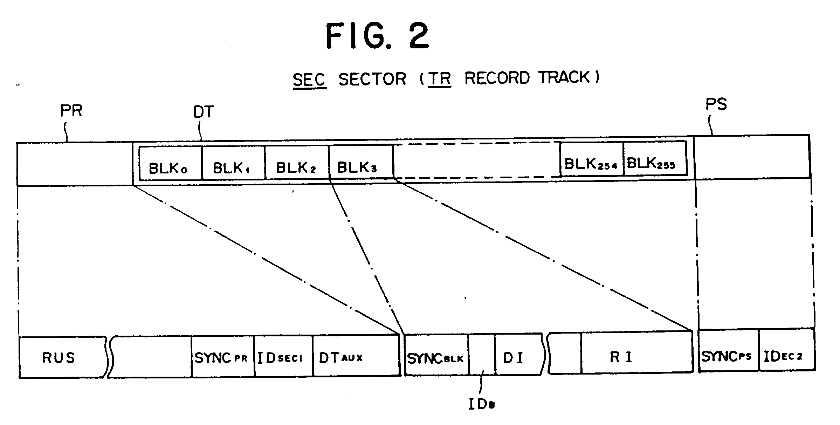

The content of each of the data tracks TR1, TR2, TR3, ... is prescribed as illustrated in Figure 2. Specifically, one data track TR corresponds to one sector SEC and is formed of a preamble PR, a data recording portion DT and a postamble PS. The preamble PR is opposed to a lower top portion of an oblique data track.

The preamble PR is composed of a 20-byte ascending sequence RUS, a 4-byte sync code SYNC_{PR}, a 4-byte sector identification data ID_{SEC1}, and a 6-byte auxiliary data DT_{AUX}.

The adjacent data recording portion DT is composed of 256 sync blocks BLK (BLK₀, BLK₁, BLK₂, ... (BLK₂₅₅), and the input information data are recorded in this portion DT. Each sync block BLK is formed of a 4-byte block sync code SYNC_{BLK}, a 1-byte block identification ID_{BLK}, a 153-byte inner data DI (inner-coded input information data) and an 8-byte parity code RI based on Reed-Solomon code notation.

The further adjacent postamble PS is composed of a 4-byte sync code SYNC_{PS} and a 4-byte sector identification data ID_{SEC2}.

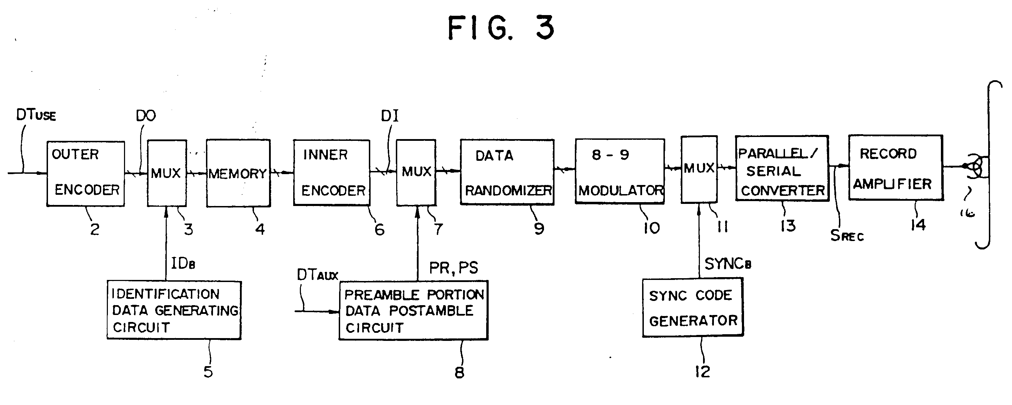

Figure 3 shows a recording system of the ID-1 format data recorder. In this recording system 1, the input information data are recorded after being encoded for error correction by a product code notation.

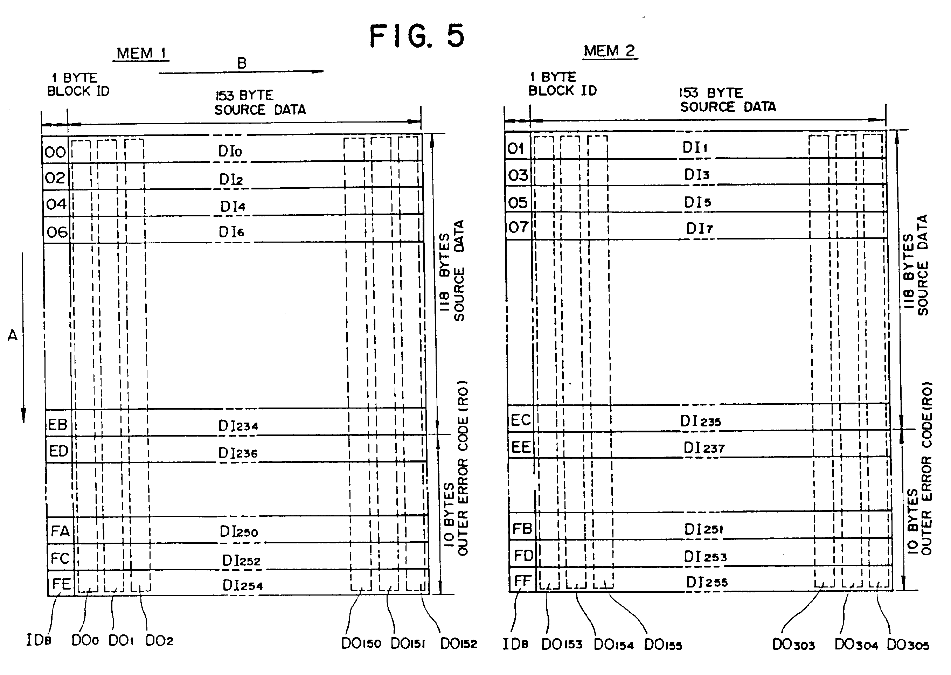

The operation of each circuit is as follows. First, 8-bit (1-byte) input information data DT_{USE} is inputted to an outer encoder 2 shown in Figure 3. The encoder 2 generates, by the use of a predetermined polynomial with regard to the data blocks each composed of 118 bytes of the input information data DT_{USE}, outer codes which are parity codes RO₀ to RO₃₀₅ each composed of a 10-byte Reed-Solomon code. Such parity code is added to the end of each data block, which is thereafter outputted as an outer data block DO. The outer data block DO is fed via a first multiplexer 3 to a memory unit 4. Figure 5 shows the structure of the memory-unit 4 and the data arrangement therein. As shown, the memory unit 4 comprises memories MEM1 and MEM2 each having a capacity of 154 bytes in a row and 128 bytes in a column. In this example, 153 outer data blocks DO₀ to DO₁₅₂ inputted sequentially are stored in the memory MEM1, while the next 153 outer data blocks DO₁₅₃ to DO₃₀₅ inputted sequentially in succession to the outer data blocks DO₀ to DO₁₅₂ are stored in the memory MEM2 in such a manner that one outer data block is written per column. The information data of one outer data block are composed of 118 bytes and, since 153 blocks of the information data are written in each of the memories MEM1 and MRM2, it follows that a total of 118 x 152 x 2 bytes (= 36,108 bytes) of the information data are written in the memory unit 4.

The data writing direction in each column of the memories MEM1 and MEM2 is indicated by an arrow A in Figure 5, and the lower ten bytes in each of the memories MEM1 and MEM2 correspond to the outer code.

There are also fed, via the first multiplexer 3 to the memory unit 4, data block identification data ID_{B} generated from an identification data generator 5 for identifying the individual rows in the memories MEM1 and MEM2. Even components ID_{BE} of such data block identification data ID_{B} are written in the memory MEM1 while odd components ID_{BD} thereof are written in the memory MEM2 column by column in the direction A.

The data thus written in the memories MEM1 and MEM2 are read out therefrom in the direction B in such a manner that the data of each row are processed as one block. The data reading operation for individual rows is performed alternately, with respect to the memories MEM1 and MEM2, in the order conforming to the data block identification data ID_{B} (00, 01, 02, 03, ...).

The data read out from the memories MEM1 and MEM2 are inputted to an inner encoder 6.

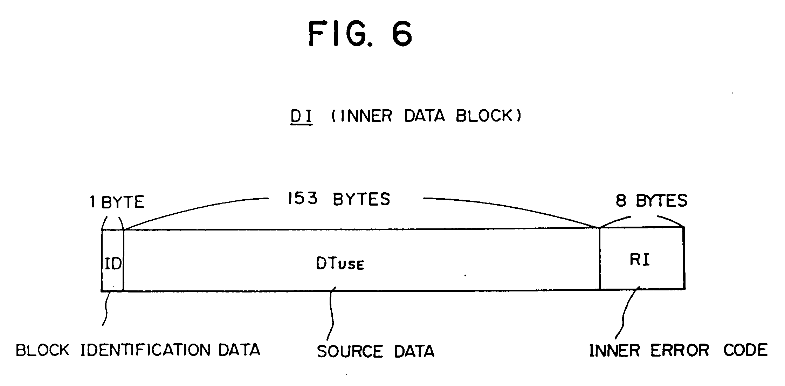

The encoder 6 generates, by the use of a predetermined polynomial with regard to each of input data blocks, inner codes which are parity codes RI₀ to RI₂₅₅ each composed of an 8-byte Reed-Solomon code. As shown in Figure 6, such parity codes are added to the ends of the data blocks respectively to form inner data blocks DI₀ to DI₂₅₅, which are then outputted to a second multiplexer 7.

The second multiplexer 7 selectively outputs the preamble data PR and the postamble data PS formed by a preamble/postamble generator 8 and also the inner data blocks DI₀ to DI₂₅₅ outputted from the inner encoder 6. Such data are outputted in the order of the preamble data PR, the inner data blocks DI₀ to DI₂₅₅ and the postamble data PS. The output of the second multiplexer 7 is fed to a data randomizer 9.

In the data randomizer 9, the data are randomized by taking an exclusive OR with regard to every byte of the input data and predetermined data. The data thus randomized are inputted to an 8 to 9 demodulator 10.

In the modulator 10, the data format is converted from a 8-bit combination to a 9-bit combination for the purpose of achieving a DC-free state by removal of the DC component from the signal waveform to be recorded on the magnetic tape. Such conversion is performed in the following manner. With regard to each of 256 values of the input data where each byte is composed of eight bits, two kinds of 9-bit data are previously determined on the basis of the ID-1 format. In such two kinds of 9-bit data, the codeword digital sums (CPS) thereof are different from each other in polarity. The 8 to 9 modulator 10 monitors the digital sum variation (DSV) of the 9-bit data outputted accordance with the input data and selects either of the two kinds of 9-bit data having different CDS values, in such a way as to reduce the DSV value to zero. Thus, the input data of 8-bit combination are inverted into DC-free data of 9-bit combination. The 8-9 modulator 10 includes a circuit for converting the input data of NRZL (non-return to zero level) from into that of NRZI (non-return to zero inverse) form. The 9-bit output data of the 8-9 demodulator 10 in NRZL form are inputted to a third multiplexer 11.

In the third multiplexer 11, a sync code SYNC_{B} of a fixed 4-byte length obtained from a sync code generator 12 is added to each of the inner data blocks DI₀ to DI₂₅₅, whereby sync blocks BLK₀ to BLK₂₅₅ are formed. The pattern of such sync code SYNC_{B} is determined on the basis of the ID-1 format, and the pattern to be recorded on the magnetic tape is so prescribed as to conform with such code pattern.

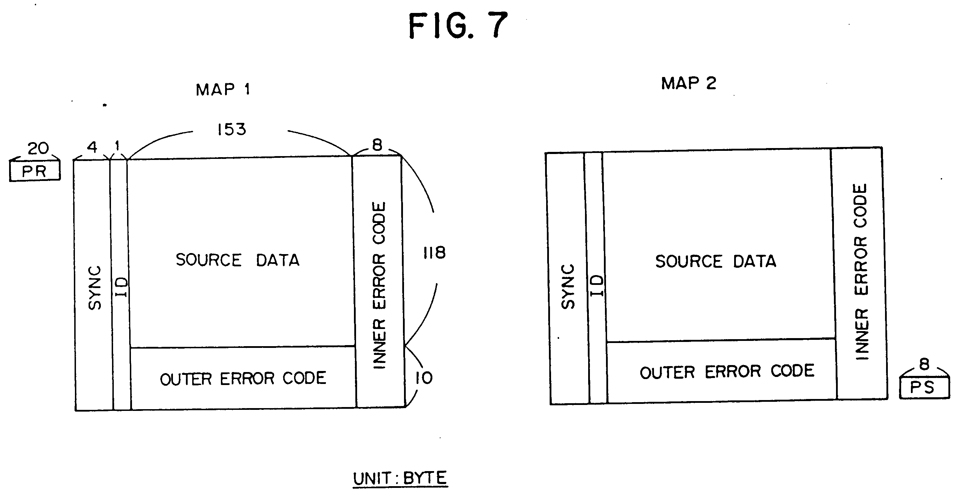

The data obtained in the above processes are shown in the form of maps in Figure 7. The output of the third multiplexer 11 has a data array obtained by scanning such maps MAP1 and MAP2 in the horizontal direction. The further detail thereof is illustrated in Figure 2. The output of the third multiplexer 11 is fed to a parallel-to-serial converter 13.

In the parallel-to-serial converter 13, the input bit-parallel data of preamble PR, sync blocks BLK₀ to BLK₂₅₅ and postamble PS are converted into bit-serial data S_{REC}. Such serial data S_{REC} is amplified by a record amplifier 14 and then is supplied as a record signal to a magnetic head 16 which scans the magnetic tape 15 in a helical scanning mode, whereby record tracks TR (..., TR1, TR2, TR3, TR4, ...) are formed on the magnetic tape 15 as illustrated in Figure 1.

In this manner, the recording system in the data recorder adds an error correction code, which is based on the Reed-Solomon product code notation, to the desired information data DT_{USE} to be recorded.

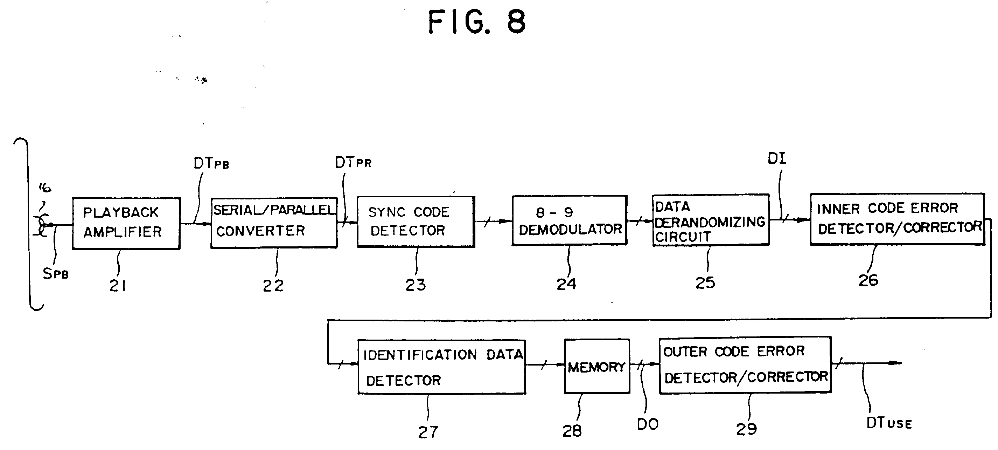

The information data DT_{USE} thus recorded on the magnetic tape 15 by the recording system of the data recorded is reproduced by a reproducing system of the data recorder shown in Figure 8.

The signal processing operation in the reproducing system is exactly inverse to the operation performed in the recording system.

In the reproducing system of the data recorder, the record tracks TR (..., TR1, TR2, TR3, TR4, ...) on the magnetic tape 15 are reproduced by the magnetic head 16 to become a playback signal S_{PB}, which is then inputted to a playback amplifier 21.

The playback amplifier 21 comprises an equalizer and binary encoder, wherein playback digital data DT_{PB} are obtained by encoding the input playback signal S_{PB} in a binary notation and are then outputted to a serial-to-parallel converter 22. In the converter 22, the serial playback digital data DT_{PB} are converted into 9-bit parallel data DT_{PR}.

In a sync code detector 23, the 4-byte sync code SYNC_{N} is detected from a stream of the parallel data DT_{PR}, and the sync block is identified in accordance with the detected sync code. The sync code detector 23 includes a circuit for converting the NRZI-form parallel data DT_{PR} into NRZL-form data.

The output of the sync code detector 23 is fed to a 9 to 8 demodulator 24, where the data processed by 8-to-9 bit conversion to be rendered DC-free in the recording system is demodulated to have an 8-bit combination again. The demodulator 23 is composed of a read only memory (ROM) and converts the 9-bit data to 8-bit data by a retrieval process.

The 8-bit data thus resumed are derandomized in a derandomizer 25 by a process inverse to the randomization is achieved by calculating an exclusive OR of the predetermined data used for the randomization and the input data fed to the derandomizer 25.

An inner code error detector/corrector 26 performs error detection and correction by using the 8-byte inner code RI₀ to RI₂₅₅ added respectively to the inner data blocks DI₀ to DI₂₅₅ of the identified sync blocks.

The inner data blocks DI₀ to DI₂₅₅ posterior to such inner code error correction are written in a memory unit 28, which is structurally the same as the aforementioned memory unit 4 of the recording system shown in Figure 3, on the basis of the 1-byte block identification data detector 27, in such a manner that one data block is written in one row. The data writing order is the same as the order of reading out the data from the memory unit 4 in the recording out the data from the memory unit 4 in the recording system, and the data blocks are written in the memories MEM1 and MEM2 row by row alternately in conformity with the block identification data. The data thus written in the memories MEM1 and MEM2 of the memory unit 28 are read out therefrom in the direction of columns in the same order as the data writing order in the memory unit 4 of the recording system, and consequently the 128-byte outer data blocks DO₀ to DO₃₀₆ are resumed.

In an outer coder error detector/corrector 29, error detection and correction are performed, with regard to the output data blocks DO₀ to DO₃₀₆ outputted from the memory unit 28, by using the 10-byte outer code RO₀ to RO₃₀₆ added to the data blocks respectively.

Thus, the information data DY_{USE} recorded on the magnetic tape 15 are reproduced in the manner described above.

In this information data recording/reproducing apparatus, the information data DT_{IN} inputted successively in a recording mode are internally divided into individual sectors or tracks formed by the rotary magnetic head 16 in accordance with a recording pattern such as ..., TR1, TR2, TR3, TR4, ... (shown in Figure 1). In a playback mode, the divided data of the individual sectors are reproduced and combined with one another to be outputted as successive playback data DT_{OUT}.

Accordingly, for exactly resuming the proper phase relation in a playback mode with regard to the information data DT_{IN}, it is contrived that sync data representing the phase relation of the information data DT_{IN} are previously inserted in the information data DT_{IN} which are to be inputted to the recording section, and such sync data are used as a reference to attain exact resumption of the phase relation during the playback mode.

In such a case, the sync data are recorded together with the information data DT_{IN} on the magnetic tape 15, so that it becomes necessary to employ a different data pattern having a peculiarity in comparison with the information data DT_{IN}.

Therefore, in the known magnetic recording/reproducing apparatus designed to record arbitrary information data DT_{IN}, it has been unavoidable that, for retained a compete peculiarity relative to sync data, the redundancy of the sync data is substantially increased.

There may be contrived a further technique of forming a blank portion in accordance with the phase relation of the information data DT_{IN}, or recording, together with the information data DT_{IN}, other data indicative of the beginning or end of such information data or indicative of the record block length, or adopting such means in combination.

However, any of the above techniques fails completely to meet the requirements with regard to the general usability, redundancy or simplicity and, even with execution of such means, the required reproducibility of the phase relation is not ensured in case any error is generated due to drop-out or the like of the magnetic tape 15.

According to the present invention there is provided an information data recording apparatus having circuits of a recording system for converting input information data into a signal of a prescribed format suited to be recorded, a rotary head for recording the output of said circuits of the recording system on a recording medium, a rotation servo circuit for controlling the rotation of said rotary head, and a transport servo circuit for controlling the transport of said recording medium, wherein said input information data are recorded divided into sectors each corresponding to a predetermined amount of the data recordable on a record track, said apparatus comprising:
an input means supplied with a sync signal representing the phase relation of said input information data;
a reference sync signal generator means for generating a reference sync signal phase-locked to the sync signal outputted from said input means; and
an information data divider means for dividing, in conformity with the sync signal obtained from said input means, the input information data into sectors each corresponding to a predetermined amount of data, and then feeding the divided information data to said circuits of the recording system;
wherein said circuits of the recording system, said rotation servo circuit and said transport servo circuit are operated on the basis of the reference sync signal outputted from said reference sync signal generator means.

According to the present invention there is also provided an information data reproducing apparatus having a rotary head for reproducing a signal recorded on a recording medium through conversion of input information data to a prescribed format after being divided into sectors each corresponding to a predetermined amount of the data corresponding to a predetermined amount of the data recordable on a track in conformity with a sync signal which represents the phase relation of the input information data, circuits of a reproducing system for inversely converting the playback signal of said prescribed format obtained from said rotary head and thereby resuming the former signal anterior to the conversion to said prescribed format, a control signal reproducing means for reproducing a control signal recorded at a predetermined position of the record track on said recording medium, a rotation servo circuit for controlling the rotation of said rotary head, and a transport servo circuit for controlling the transport of said recording medium, wherein the input information data is resumed from the reproduced signal while the sync signal representing the phase relation of said input information data is also resumed, said apparatus comprising:
an input means supplied with an external sync signal for externally synchronizing said information data reproducing apparatus;
a reference sync signal generator means for generating a reference sync signal phase-locked to the sync signal outputted from said input means; and
an information data derandomizer means for derandomizing the divided information data, which is the output of said circuits of the recording system, to resume the same state as that of the input information data in the recording mode;
wherein said circuits of the reproducing system, said rotation servo circuit and said transport servo circuit are operated on the basis of the reference sync signal outputted from said reference sync signal generator means, and the sync signal representing the phase relation of the information data outputted from said information data derandomizer means is obtained from the output of said reference sync signal generator means.

Thus, in an information data recording/reproducing apparatus where information data are recorded on a magnetic tape while being divided into sectors in accordance with a recording pattern of magnetic heads; in a recording mode, the sector phase of the information data to be recorded on the magnetic tape is determined in conformity with sync data which is inputted with the information data and represents the phase relation thereto, and in a playback mode, the sync data are obtained on the basis of the reproduced phase that conforms with the sector phase obtained from the magnetic tape.

The invention will now be described by way of example with reference to the accompanying drawings, throughout which like parts are referred to by like references, and in which:

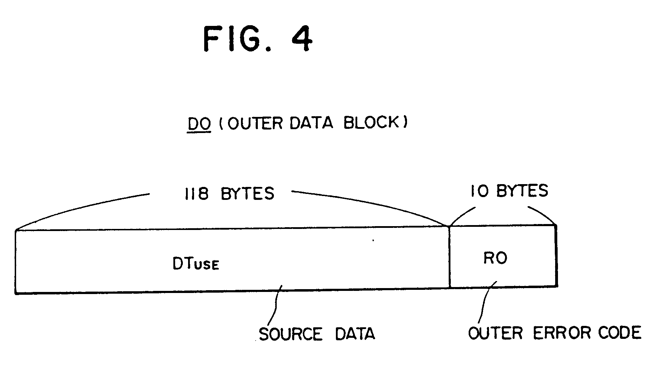

Figures 1 to 8 schematically illustrate a known data recorder based on the ID-1 format, in which:
Figure 1 shows a recording pattern of the ID-1 format on a magnetic tape;
Figure 2 shows the content in each record track of the ID-1 format;
Figure 3 shows a schematic configuration of circuits in a recording system;
Figure 4 shows the output data of an outer encoder included in the recording system;
Figure 5 shows the structure of a memory unit included in the recording system;
Figure 6 shows the output data of an inner encoder included in the recording system;
Figure 7 shows data maps where data to be processed in the recording system are arranged on a plane;
Figure 8 shows a schematic configuration of circuits in a reproducing system;
Figures 9 to 12 illustrate an embodiment of the present invention, in which:

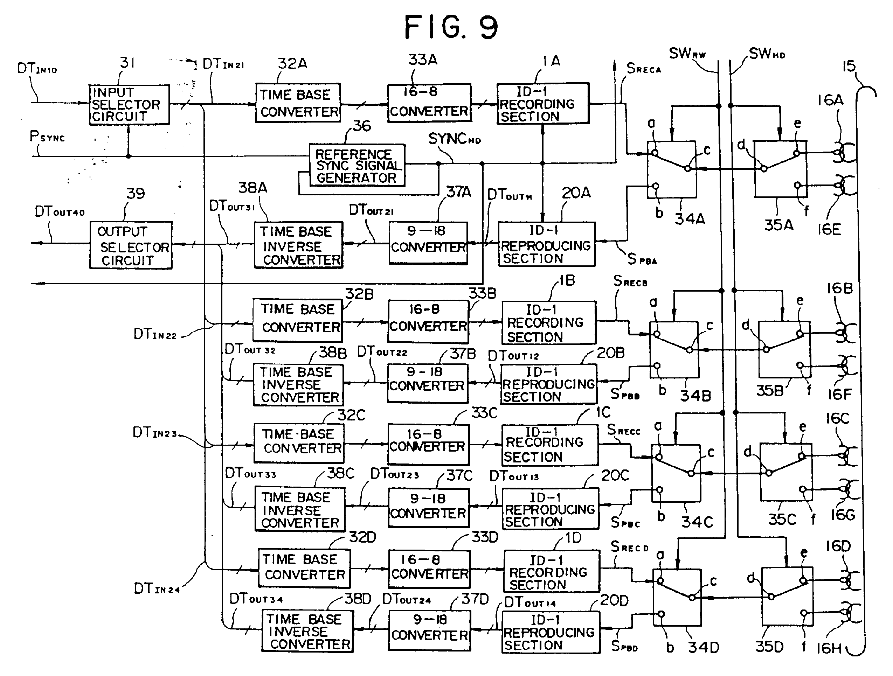

Figure 9 is a block diagram of an embodiment of information data recording/reproducing apparatus according to the present invention;

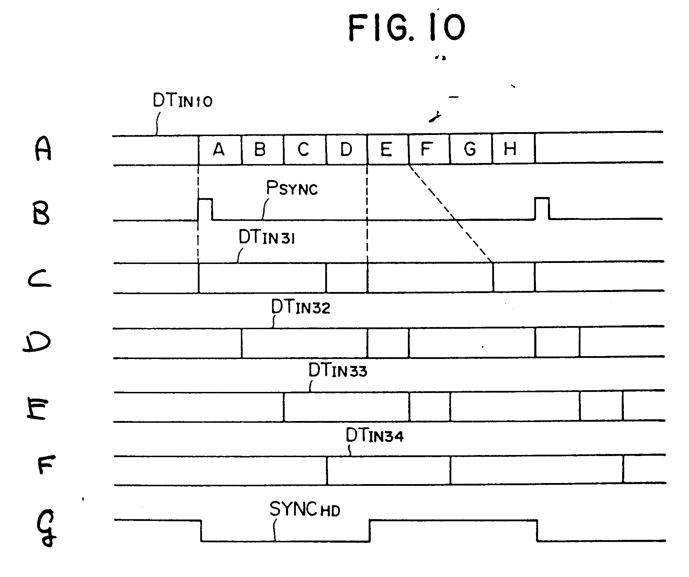

Figure 10 is a timing chart for explaining the recording operation of the apparatus of Figure 9;

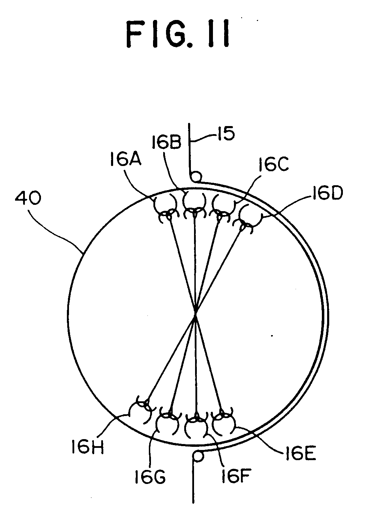

Figure 11 schematically shows the structure of a rotary head assembly; and

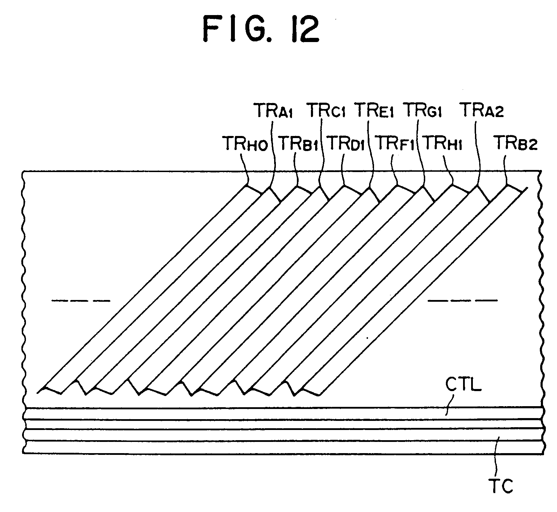

Figure 12 shows the relationship of mutual correspondence between record tracks and magnetic heads.

In Figure 9 where the components corresponding to those used in Figure 8 are denoted by the same reference numerals, an information data recording/reproducing apparatus 30 comprises four ID-1 recording sections and four ID-1 reproducing sections which are based on the known ID-1 format.

Initially in the apparatus 30, information data DT_{IN10} of an 8-but parallel combination having a frequency of 32 MHz for example are supplied to an input selector circuit 31.

In the input selector circuit 31, first the information data DT_{IN10} are processed by 8-to-16 bit conversion to become information data DT_{IN20} of 16-bit (2-byte) parallel combination. Then, as shown in Figure 10, the information data DT_{IN20} are divided from the top phase thereof into record tracks based on the ID-1 format, that is, into sectors each composed of 36,108 bytes, in accordance with the data sync signal P_{SYNC} (Figure 10B) conforming with the phase relation of the input information data DT_{IN10} (Figure 10A). The 1st to 4th information data DT_{IN21} to DT_{IN24} thus obtained are fed sequentially and cyclically to 1st to 4th time base converters 32A to 32D.

The 1st to 4th time base converters 32A to 32D are each composed of a first-in-first-out (FIFO) memory and serve to add a predetermined blank portion to each of the information data DT_{IN21} to DT_{IN24} of one sector inputted sequentially. Thereafter the data are read at a frequency of 8 MHz, for example, and are then fed to 16 to 8 converters 33A to 33D in the next stage.

In the 16 to 8 converters 33A to 33D, the 16-bit information data DT_{IN31}, DT_{IN32}, DT_{IN33}, DT_{IN34} (Figures 10C to 10F) are converted to 8-bit data and are then fed to corresponding ID-1 recording sections 1A to 1D respectively.

Thus, in the apparatus 30, the input information data DT_{IN10} are time-divided in accordance with the phase relation thereof, and are then supplied sequentially and cyclically to the 1st to 4th ID-1 recording sections 1A to 1D.

The 1st to 4th ID-1 recording sections 1A to 1D are substantially the same in structure as the recording section of the aforementioned information data recording/reproducing apparatus shown in Figure 3, and record signals S_{RECA} to S_{RECD} of the ID-1 format obtained from the ID-1 recording sections 1A to 1D, which are fed respectively via 1st input terminals a and output terminals c of recording/reproducing selector circuits 34A to 34D to input terminals d of the head switching circuits 35A to 35D. In response to control of a head switching signal SW_{HD}, the record signals are supplied from 1st or 2nd output terminals e or f to the magnetic heads 16A to 16D for channels A to D or to the magnetic heads 16E to 16H for channels E to H.

In the apparatus 30, the magnetic heads 16A to 16D for the channels A to D and the magnetic heads 16E to 16H for the channels E to H are disposed as illustrated in Figure 11. On a rotary head assembly 40 around which a magnetic tape 15 is wound obliquely over an angular range of 180 degrees, the magnetic heads 16A to 16D for the channels A to D are disposed substantially at the same position, which the magnetic heads 16E to 16H for the channels E to H are disposed substantially at the same position in such a manner as to be spaced apart by an angle of 180 degrees respectively from the corresponding magnetic heads 16A to 16D for the channels A to D.

Therefore, with one rotation of the rotary head assembly 40 in the apparatus 30, eight record tracks ..., TR_{A1} - TR_{H1} ... corresponding to the channels A to H are formed as illustrated in Figure 12.

In the apparatus 30, the data sync signal P_{SYNC} conforming with the phase relation of the input information data DT_{IN10} is fed to the input selector circuit 31 and is thereby inputted to a reference sync signal generator 36.

The reference sync signal generator 36 is composed of a phase locked loop (PLL) and generates a head controlling reference sync signal SYNC_{HD} (Figure 10g) which rises and falls periodically in accordance with the frequency of the input data sync signal P_{SYNC} (Figure 10B). The signal SYNC_{HD} thus generated is then fed to the 1st ID-1 recording section 1A and the 1st ID-1 reproducing section 20A while being fed also to a drum servo circuit, a capstan servo circuit and a head switching control circuit (not shown) for the rotary head assembly 40.

Thus, in the apparatus 30, a control track reference signal based on the head controlling reference sync signal SYNC_{HD} is written on the control track CTL on the magnetic tape 15 at positions corresponding to the channel-A record tracks ..., TR_{A1}, TR_{A2}, ..., and the magnetic heads 16A to 16D and 16E to 16H are selectively switched under control of the head controlling reference sync signal SYNC_{HD} obtained from the reference sync signal generator 36.

In this manner, the input information data DT_{IN10} are sequentially recorded, from the top phase locked to the head controlling reference sync signal SYNC_{HD}, on eight record tracks TR_{A1} to TR_{H1} corresponding to the channels A to H.

Meanwhile, during a playback mode of the apparatus 30, the drum servo circuit performs its control in such a manner that the rotation phase of the rotary head assembly 40 is synchronized with the head controlling reference sync signal SYNC_{HD} generated in synchronism with the data sync signal P_{SYNC} inputted for external synchronization, whereby the top phase of the data reproduced from each track is synchronized with the head controlling reference sync signal SYNC_{HD}. The capstan servo circuit performs its control to start a playback operation in a state where the channel-A or channel-E magnetic head 16A or 16E is set opposite to the channel-A record tracks ..., TR_{A1}, TR_{A2}, ... in response to the head controlling reference sync signal SYNC_{HD} and the control track reference signal on the control track CTL of the magnetic tape 15. In this manner, the tape transport is so controlled that the channel of the magnetic head in the playback mode is maintained coincident with the channel of the magnetic head in the recording mode.

Thus, the record tracks ..., TR_{A1} - TR_{H1} ... on the magnetic tape 15 are sequentially read out by the corresponding magnetic heads 16A to 16D for the channels A to D and the magnetic heads 16E to 16H for the channels E to H respectively, and 1st to 4th playback signals S_{PBA} to S_{PBD} thus obtained are fed via the head switching circuits 35A to 35D and the recording/reproducing selector circuits 34A to 34D respectively to the 1st to 4th ID-1 reproducing sections 20A to 20D.

The 1st to 4th ID-1 reproducing sections 20A to 20D are substantially the same as in the reproducing section in the apparatus of Figure 8, and playback data DT_{OUT11} to DT_{OUT14} obtained from such ID-1 reproducing sections 20A to 20D respectively are formed into 9-bit parallel data with addition of a 1-bit data error flag thereto, and then are fed to the 1st to 4th 9 to 18 converters 37A to 37D.

In the 1st to 4th 9 to 18 converters 37A to 37D, the 9-bit parallel playback data DT_{OUT11} to DT_{OUT14} inputted thereto are processed by 9-to-18 conversion to become 18-bit (2-byte) parallel playback data _{OUT21} to DT_{OUT24}, which are then fed to corresponding 1st to 4th time base inverse converters 38A to 38D respectively.

The 1st to 4th time base inverse converters 38A to 38D are each composed of an FIFO memory similarly to the 1st to 4th time base converters 32A to 32D, and read out the input playback DT_{OUT21} to DT_{OUT24} of one track or sector at a frequency of 32MHz and then feed the read data to an output selector circuit 39.

In the output selector circuit 39, the playback data DT_{OUT31} to DT_{OUT34} fed respectively from the 1st to 4th time base inverse converters 38A to 38D are selectively inputted in succession at the timing conforming with the playback data DT_{OUT31} to DT_{OUT34}, and then the 18-bit parallel playback data DT_{OUT31} to DT_{OUT34} are converted to 9-bit parallel playback data DT_{OUT40} including an error flag of 1-bit data. Subsequently the playback data DT_{OUT40} thus obtained are outputted.

The 1st ID-1 reproducing section 20A is so formed as to execute its playback process in accordance with the head controlling reference sync signal SYNC_{HD} generated in synchronism with the data sync signal P_{SYNC} inputted in the playback mode, whereby the phase relation of the information data DT_{IN10} is resumed out of the playback data DT_{OUT40}.

In the apparatus 30, the tracks ..., TR_{A1} - TR_{H1}, ... recorded in conformity with the phase relation of the information data DT_{IN10} during the recording mode can be reproduced during the playback mode in accordance with the control track reference signal recorded on the control track CTL on the magnetic tape 15, so that the playback data DT_{OUT40} can be obtained with exact resumption of the phase relation of the information data DT_{IN10}.

Due to this, the divided sector phase based on the record track in the mode of recording the information data DT_{IN10} on the magnetic tape 15 is determined in conformity with the data sync signal P_{SYNC} which represents the phase relation of the information data DT_{IN10}. In the playback mode, the operation is performed in accordance with the control track reference signal obtained from the control track CTL on the magnetic tape 15, whereby it is rendered possible to realize an information data recording/reproducing apparatus capable of exactly resuming, in the playback mode, the phase relation of the recorded information data DT_{IN10}.

Thus, the synchronization required in forming eight record tracks during one rotation of the rotary head assembly can be simplified consequently to form an improved information data recording/reproducing apparatus which is simple in structure and is capable of performing a faster information data recording operation.

In the embodiment described, the rotary head assembly has eight-channel magnetic heads for recording information data while dividing the same. However, it is to be understood that the present invention is not limited to such example alone and may be applied also to a magnetic recording/reproducing apparatus where the rotary head assembly is equipped with a different number of magnetic heads for two or more channels.

Furthermore, the present invention is not limited to the above embodiment where the synchronization is effected at the top phase with regard to the phase relation of information data, and any of various phase relations may be employed in compliance with individual requirements on condition that the desired synchronization can be attained on both recording and reproducing sides with respect to a predetermined bit position or byte position in the information data.

Moreover, although the above embodiment is applied to a magnetic recording/reproducing apparatus based on the ID-1 format, the invention may also be applied widely to any of apparatus designed for dividing and recording desired information data on a magnetic tape.

## Claims

1. An information data recording apparatus having circuits of a recording system for converting input information data into a signal of a prescribed format suited to be recorded, a rotary head (16) for recording the output of said circuits of the recording system on a recording medium (15), a rotation servo circuit for controlling the rotation of said rotary head (16), and a transport servo circuit for controlling the transport of said recording medium (15), wherein said input information data are recorded divided into sectors each corresponding to a predetermined amount of the data recordable on a record track, said apparatus comprising:
an input means supplied with a sync signal representing the phase relation of said input information data;
a reference sync signal generator means (36) for generating a reference sync signal phase-locked to the sync signal outputted from said input means; and
an information data divider means (31) for dividing, in conformity with the sync signal obtained from said input means, the input information data into sectors each corresponding to a predetermined amount of data, and then feeding the divided information data to said circuits of the recording system;
wherein said circuits of the recording system, said rotation servo circuit and said transport servo circuit are operated on the basis of the reference sync signal outputted from said reference sync signal generator means (36).

2. Apparatus according to claim 1 wherein said circuits of the recording system consist of a plurality of channels, and said information data divider means (31) distributes the divided information data to the channels of said circuits of the recording system respectively.

3. Apparatus according to claim 2 wherein a plurality of rotary heads (16) are provided correspondingly to the channels of said circuits of the recording system, and a control signal produced on the basis of said reference sync signal is recorded at a position corresponding to the record track formed by a predetermined rotary head (16) out of said plurality of rotary heads (16), at a position on a control track formed on said recording medium (15).

4. Apparatus according to claim 2 further comprising a plurality of time base converter means (32) corresponding to said plurality of channels, wherein said time base converter means (32) serve to extend the data rate of the information data outputted from said information data divider means (32).

5. An information data reproducing apparatus having a rotary head (16) for reproducing a signal recorded on a recording medium (15) through conversion of input information data to a prescribed format after being divided into sectors each corresponding to a predetermined amount of the data corresponding to a predetermined amount of the data recordable on a track in conformity with a sync signal which represents the phase relation of the input information data, circuits of a reproducing system for inversely converting the playback signal of said prescribed format obtained from said rotary head (16) and thereby resuming the former signal anterior to the conversion to said prescribed format, a control signal reproducing means for reproducing a control signal recorded at a predetermined position of the record track on said recording medium (15), a rotation servo circuit for controlling the rotation of said rotary head (16), and a transport servo circuit for controlling the transport of said recording medium (15), wherein the input information data is resumed from the reproduced signal while the sync signal representing the phase relation of said input information data is also resumed, said apparatus comprising:
an input means supplied with an external sync signal for externally synchronizing said information data reproducing apparatus;
a reference sync signal generator means (36) for generating a reference sync signal phase-locked to the sync signal outputted from said input means; and
an information data derandomizer means (25) for derandomizing the divided information data, which is the output of said circuits of the recording system, to resume the same state as that of the input information data in the recording mode;
wherein said circuits of the reproducing system, said rotation servo circuit and said transport servo circuit are operated on the basis of the reference sync signal outputted from said reference sync signal generator means (36), and the sync signal representing the phase relation of the information data outputted from said information data derandomizer means (25) is obtained from the output of said reference sync signal generator means (36).

6. Apparatus according to claim 5 further having a plurality of rotary heads (16), wherein said circuits of the reproducing system consist of a plurality of channels corresponding to said rotary heads (16), so that a plurality of record tracks are reproduced per rotation of a rotary member (40) to which said rotary heads (16) are attached, and said information data derandomizer means (25) derandomized the information data outputted from said circuits of the reproducing system.

7. Apparatus according to claim 6 wherein said transport servo circuit controls the recording medium (15) in conformity with the reference sync signal and the control signal in such a manner that a predetermined one of said rotary heads (16) scans the record track where said control signal is existent.

8. Apparatus according to claim 6 further comprising a plurality of time base converter means (32) correspondingly to said plural-channel circuits of the reproducing system, where sad time base converter means (32) compress the data rate of the information data outputted from said plural-channel circuits of the reproducing system.

## Patentansprüche

1. Informationsdaten-Aufzeichnungsvorrichtung mit Schaltungen eines Aufzeichnungssystems zur Umsetzung von Eingangs-Informationsdaten in ein Signal mit vorgeschriebenem Format, das zur Aufzeichnung geeignet ist, einem Drehkopf (16) zur Aufzeichnung des Ausgangssignals der Schaltungen des Aufzeichnungssystems auf einem Aufzeichnungsträger (15), einem Dreh-Servokreis zur Steuerung der Drehung des Drehkopfs (16), und einem Transport-Servokreis zur Steuerung des Transports des Aufzeichnungsträgers (15), wobei die Eingangs-Informationsdaten aufgeteilt in Sektoren aufgezeichnet sind, von denen jeder einer vorbestimmten Datenmenge entspricht, die auf einer Aufzeichnungsspur aufzeichenbar ist, wobei die Vorrichtung aufweist:
eine mit einem Synchronisationssignal versorgte Eingangseinrichtung, die die Phasenbeziehung der Eingangs-Informationsdaten wiedergibt;
eine Referenzsynchronisation-Erzeugungseinrichtung (36) zur Erzeugung eines Referenz-Synchronisationssignals, das mit dem Synchronisationssignal verriegelt ist, das von der Eingangseinrichtung ausgegeben wird, und
ein Informationsdaten-Teilereinrichtung (31) zum Aufteilen der Informationsdaten in Übereinstimmung mit dem von der Eingangseinrichtung erhaltenen Synchronisationssignal in Sektoren, von denen jeder einer bestimmten Datenmenge entspricht, und zum darauffolgenden Weitergeben der aufgeteilten Informationsdaten zu den Schaltungen des Aufzeichnungssystems,
bei der die Schaltungen des Aufzeichnungssystems, der Dreh-Servokreis und der Transport-Servokreis auf der Grundlage des Referenz-Synchronisationssignals betreibbar ist, das von der Referenzsynchronisationssignal-Erzeugungseinrichtung (36) ausgegeben ist.

2. Vorrichtung nach Anspruch 1, bei der die Schaltungen des Aufzeichnungssystems aus mehreren Kanälen bestehen, und die Informationsdaten-Teilereinrichtung (31) die aufgeteilten Informationsdaten jeweils auf die Kanäle der Schaltungen des Aufzeichnungssystems verteilt.

3. Vorrichtung nach Anspruch 2, bei der mehrere Drehköpfe (16) entsprechend den Kanälen der Schaltungen des Aufzeichnungssystems vorgesehen sind, und ein Steuersignal, das auf der Grundlage des Referenz-Synchronisationssignals erzeugt ist, an einer Stelle aufgezeichnet wird, die der Aufzeichnungsspur entspricht, die durch einen bestimmten Aufzeichnungskopf (16) der Anzahl von Aufzeichnungsköpfen (16) gebildet ist, an einer Stelle auf einer Steuerspur, die auf dem Aufzeichnungsträger (15) gebildet ist.

4. Vorrichtung nach Anspruch 2, weiterhin aufweisend mehrere Zeitbasis-Umsetzereinrichtungen (32) entsprechend den mehreren Kanälen, wobei die Zeitbasis-Umsetzereinrichtungen (32) zur Erweiterung der Datenrate der Informationsdaten dienen, die von der Informationsdaten-Teilereinrichtung (31) ausgegeben werden.

5. Informationsdaten-Wiedergabevorrichtung aufweisend einen Drehkopf (16) zur Wiedergabe eines Signals, das auf einem Aufzeichnungsträger (15) aufgezeichnet ist, durch Umsetzung von Eingangs-Informationsdaten auf ein vorgeschriebenes Format, nachdem sie in Sektoren eingeteilt sind, von denen jeder einer bestimmten Datenmenge entsprechend einer vorbestimmten Datenmenge entspricht, die auf einer Spur aufzeichenbar ist, in Übereinstimmung mit einem Synchronisationssignal, das die Phasenbeziehung der Eingangs-Informationsdaten wiedergibt, Schaltungen eines Wiedergabesystems zur Rückumsetzung des Wiedergabesignals des vorgeschriebenen Formats, das von einem Drehkopf (16) erhalten ist, und dadurch zum Wiederherstellen des Signals vor der Umsetzung zu dem vorgeschriebenen Format, eine Steuersignal-Wiedergabevorrichtung zur Wiedergabe eines Steuersignals, das an einer vorbestimmten Stelle der Aufzeichnungsspur auf dem Aufzeichnungsträger (15) aufgezeichnet ist, ein Dreh-Servokreis zur Steuerung der Drehbewegung des Drehkopfs (16), und einen Transport-Servokreis zur Steuerung des Transports des Aufzeichnungsträgers (15),
bei der die Eingangs-Informationsdaten aus dem wiedergegebenen Signal wiederhergestellt werden, während das Synchronisationssignal, das die Phasenbeziehung der Eingangs-Informationsdaten wiedergibt ebenso wieder hergestellt wird, wobei die Vorrichtung aufweist:
eine Eingangseinrichtung, die mit einem externen Synchronisationssignal versorgt ist, um extern die Vorrichtung zur Wiedergabe von Informationsdaten zu synchronisieren;
eine Referenz-Synchronisationssignal-Erzeugungseinrichtung (36) zur Erzeugung eines Referenz-Synchronisationssignals, das mit dem Synchronisationssignal verriegelt ist, das von der Eingangseinrichtung ausgegeben ist, und
eine Informationsdaten-Derandomizer-Einrichtung (25) zum Zurückrechnen aus Zufallszahlen (derandomize) der Informationsdaten, die das Ausgangssignal der Schaltungen des Aufzeichnungssystems sind, um denselben Zustand wie dem der Eingangs-Informationsdaten in der Aufzeichnungsbetriebsart wieder herzustellen, bei der die Schaltungen des Wiedergabesystems, der Dreh-Servokreis und der Transport-Servokreis auf der Grundlage des Referenz-Synchronisationssignals betreibbar sind, daß von der Referenz-Synchronisationssignal-Erzeugungseinrichtung (36) ausgegeben ist, und das Synchronisationssignal, das die Phasenbeziehung der Informationsdaten wiedergibt, die von der Informationsdaten-Derandomizer-Einrichtung (25) ausgegeben sind, aus dem Ausgangssignal der Referenz-Synchronisationssignal-Erzeugungseinrichtung (36) erhalten ist.

6. Vorrichtung nach Anspruch 5, weiterhin aufweisend mehrere Drehköpfe (16), bei der die Schaltungen des Wiedergabesystems aus mehreren Kanälen bestehen, die den Drehköpfen (16) entsprechen, so daß mehrere Aufzeichnungsspuren pro Drehung eines Drehelementes (40) wiedergegeben sind, an dem die Drehköpfe (16) befestigt sind, und die Informationsdaten-Derandomizer-Einrichtung (25) die Informationsdaten, die von den Schaltungen des Wiedergabesystems ausgegeben sind, aus Zufallszahlen zurückgerechnet.

7. Vorrichtung nach Anspruch 6, bei der der Transport-Servokreis den Aufzeichnungsträger (15) in Übereinstimmung mit dem Referenz-Synchronisationssignal und dem Steuersignal so steuert, daß ein vorbestimmter der Drehköpfe (16) die Aufzeichnungsspur abtastet, wenn das Steuersignal vorhanden ist.

8. Vorrichtung nach Anspruch 6, weiterhin aufweisend mehrere Zeitbasis-Umsetzereinrichtungen (32) entsprechend den Mehrkanalkreisen des Wiedergabesystems, wobei die Zeitbasis-Umsetzereinrichtungen (32) die Datenrate der Informationsdaten komprimiert, die von den Mehrkanalkreisen des Wiedergabesystems ausgegeben werden.

## Revendications

1. Appareil d'enregistrement de données d'informations ayant des circuits d'un système d'enregistrement pour convertir des données d'informations d'entrée en un signal d'un format prédéterminé approprié à l'enregistrement, une tête tournante (16) pour enregistrer la sortie desdits circuits du système d'enregistrement sur un support d'enregistrement (15), un circuit d'asservissement de rotation pour commander la rotation de ladite tête tournante (16), et un circuit d'asservissement de transport pour commander le transport dudit support d'enregistrement (15), dans lequel lesdites données d'informations d'entrée sont enregistrées divisées en secteurs chacun correspondant à une quantité prédéterminée des données enregistrables sur une piste d'enregistrement, ledit appareil comprenant :
un dispositif d'entrée recevant un signal de synchronisation représentant la relation de phase desdites données d'informations d'entrée ;
un dispositif générateur de signal de synchronisation de référence (36) pour générer un signal de synchronisation de référence verrouillé en phase sur le signal de synchronisation fourni à partir dudit dispositif d'entrée ; et
un dispositif diviseur de données d'informations (31) pour diviser, en conformité avec le signal de synchronisation obtenu à partir dudit dispositif d'entrée, les données d'informations d'entrée dans des secteurs correspondant chacun à une quantité prédéterminée de données, et ensuite pour fournir les données d'informations divisées auxdits circuits du système d'enregistrement ;
dans lequel lesdits circuits du système d'enregistrement, ledit circuit d'asservissement de rotation et ledit circuit d'asservissement de transport sont actionnés sur la base du signal de synchronisation de référence fourni par ledit dispositif générateur de signal de synchronisation de référence (36).

2. Appareil selon la revendication 1 dans lequel lesdits circuits du système d'enregistrement se composent d'une pluralité de canaux, et ledit dispositif diviseur de données d'informations (31) distribue respectivement les données d'informations divisées aux canaux desdits circuits du système d'enregistrement.

3. Appareil selon la revendication 2 dans lequel une pluralité de têtes tournantes (16) sont fournies de façon correspondante aux canaux desdits circuits du système d'enregistrement, et un signal de commande produit sur la base dudit signal de synchronisation de référence est enregistré à une position correspondant à la piste d'enregistrement formée par une tête tournante prédéterminée (16) à l'extérieur de ladite pluralité de têtes tournantes (16), à une position sur une piste de commande formée sur ledit support d'enregistrement (15).

4. Appareil selon la revendication 2, comprenant en outre une pluralité de dispositifs convertisseurs de base de temps (32) correspondant à ladite pluralité de canaux, dans lequel ledit dispositif convertisseur de base de temps (32) sert à étendre le débit de données des données d'informations fournies par ledit dispositif diviseur de données d'informations (32).

5. Appareil de reproduction de données d'informations ayant une tête tournante (16) pour reproduire un signal enregistré sur un support d'enregistrement (15) grâce à une conversion de données d'informations d'entrée à un format prédéterminé après division en secteurs correspondant chacun à une quantité prédéterminée des données correspondant à une quantité prédéterminée des données enregistrables sur une piste en conformité avec un signal de synchronisation qui représente la relation de phase des données d'informations d'entrée, des circuits d'un système de reproduction pour convertir de façon inverse le signal de relecture dudit format prédéterminé obtenu à partir de ladite tête tournante (16) et ainsi pour reprendre le signal précédent antérieur à la conversion audit format prédéterminé, un dispositif de reproduction de signal de commande pour reproduire un signal de commande enregistré à une position prédéterminée de la piste d'enregistrement sur ledit support d'enregistrement (15), un circuit d'asservissement de rotation pour commander la rotation de ladite tête tournante (16), et un circuit d'asservissement de transport pour commander le transport dudit support d'enregistrement (15), dans lequel les données d'informations d'entrée sont reprises à partir du signal reproduit alors que le signal de synchronisation représentant la relation de phase desdites données d'informations d'entrée sont aussi reprises, ledit appareil comprenant :
un dispositif d'entrée recevant un signal de synchronisation externe pour synchroniser de façon externe ledit appareil de reproduction de données d'informations ;
un dispositif générateur de signal de synchronisation de référence (36) pour générer un signal de synchronisation de référence verrouillé en phase sur le signal de synchronisation fourni par ledit dispositif d'entrée ; et
un dispositif de dérandomisation de données d'informations (25) pour dérandomiser les données d'informations divisées, qui est la sortie desdits circuits du système d'enregistrement, pour reprendre le même état que celui des données d'informations d'entrée dans le mode d'enregistrement ;
dans lequel lesdits circuits du système de reproduction, ledit circuit d'asservissement de rotation et ledit circuit d'asservissement de défilement, sont actionnés sur la base du signal de synchronisation de référence fourni par ledit dispositif générateur de signal de synchronisation de référence (36), et le signal de synchronisation représentant la relation de phase des données d'informations fournies par ledit dispositif de dérandomisation de données d'informations (25) est obtenu à partir de la sortie dudit dispositif générateur de signal de synchronisation de référence (36).

6. Appareil selon la revendication 5 comprenant en outre une pluralité de têtes tournantes (16), dans lequel lesdits circuits du système de reproduction se composent d'une pluralité de canaux correspondant auxdites têtes tournantes (16), de sorte qu'une pluralité de pistes d'enregistrement sont reproduites par rotation d'un élément de rotation (40) auquel lesdites têtes tournantes (16) sont fixées, et ledit dispositif de dérandomisation de données d'informations (25) dérandomisait les données d'informations fournies par ledit circuit du système de reproduction.

7. Appareil selon la revendication 6 dans lequel ledit circuit d'asservissement de transport commande le support d'enregistrement (15) en conformité avec le signal de synchronisation de référence et le signal de commande d'une manière telle qu'une tête prédéterminée desdites têtes tournantes (16) balaye la piste d'enregistrement où ledit signal de commande est existant.

8. Appareil selon la revendication 6 comprenant en outre une pluralité de dispositifs convertisseurs de base de temps (32) de façon correspondante auxdits circuits à plusieurs canaux du système de reproduction, où lesdits dispositifs convertisseurs de base de temps (32) comprennent le débit de données des données d'informations fournies par lesdits circuits à plusieurs canaux du système de reproduction.
